# EUROPEAN PATENT APPLICATION

(11) **EP 2 899 296 A1**
(43) Date of publication of application: **29.07.2015**
(21) Application number: 13839636.1
(22) Date of filing: 02.08.2013
(51) Int. Cl.: C23C 22/68, C23C 22/78

(54) **SURFACE-TREATED ALUMINUM MATERIAL AND METHOD FOR PRODUCING SAME**

(30) Priority: 21.09.2012 JP 2012208423
(71) Applicant: UACJ Corporation, Tokyo 100-0004 (JP)
(72) Inventor: TAKASUNA, Shirou, Tokyo 1000004 (JP)
(74) Representative: Bennett, Nicholas
(86) International application number: PCT/JP2013/071018
(87) International publication number: WO 2014/045733

(57) **Abstract**

Provided is a surface-treated aluminum material with a surface having a plurality of concave features formed thereon, and being covered with a hydrated aluminum oxide layer with a thickness of 5 nm or more and 1000 nm or less. An area of the plurality of concave features is 15% or more of an area of the surface.

## Description

### CROSS-REFERENCE TO RELATED APPLICATIONS

This international application claims the benefit of Japanese Patent Application No. 2012-208423 filed September 21, 2012 in the Japan Patent Office, and the entire disclosure of Japanese Patent Application No. 2012-208423 is incorporated herein by reference.

### TECHNICAL FIELD

The present invention relates to a surface-treated aluminum material and a method of producing the same.

### BACKGROUND ART

Conventionally, a technique is known of coating a surface of an aluminum material with a resin. In this technique, it is necessary to improve adhesion between the aluminum material and the resin coating the surface (hereinafter, coating resin), and various methods have been proposed. For example, there have been proposed are a method of providing roughness on a surface of an aluminum material by etching (Patent Document 1), a method of forming a boehmite on a surface of an aluminum material (Patent Documents 2 and 3), and a method for providing fine roughness on a surface of an aluminum material with presence of reactive functional groups (Patent Document 4).

### PRIOR ART DOCUMENTS

### PATENT DOCUMENTS

Patent Document 1: Japanese Unexamined Patent Application Publication No. 2002-120002
Patent Document 2: Japanese Unexamined Patent Application Publication No. H05-25574
Patent Document 3: WO 1997/035716
Patent Document 4: Japanese Unexamined Patent Application Publication No. 2003-170531

### SUMMARY OF THE INVENTION

### PROBLEMS TO BE SOLVED BY THE INVENTION

In the methods of Patent Documents 1 to 4, if resin coating is performed some time after the surface treatment of the aluminum material, adhesion between the aluminum material and the coating resin becomes insufficient.

In one aspect of the invention, it is desirable that a surface-treated aluminum material, and a method of producing the same, are provided, in which the surface-treated aluminum material has high adhesion to a coating resin even when resin coating is performed some time after the production of the material.

### MEANS FOR SOLVING THE PROBLEMS

A surface-treated aluminum material of a first aspect of the present invention is preferably provided with a surface having a plurality of concave features formed thereon, and being covered with an aluminum hydrated oxide layer with a thickness of 5 nm or more and 1000 nm or less, an area of the plurality of concave features being 15% or more of an area of the surface.

The surface-treated aluminum material according to the one aspect of the present invention has high adhesion to the coating resin even when the resin coating is performed some time after the plurality of concave features and the aluminum hydrated oxide layer are formed (i.e., after the surface-treated aluminum material is produced). Therefore, a process of the resin coating may not necessarily be performed immediately after the production process of the surface-treated aluminum material. The degree of freedom of the process is increased.

As a surface-treated aluminum material of a second aspect of the present invention, it is preferable that the hydrated aluminum oxide layer satisfies conditions 1 to 3 below. In this case, adhesion between the coating resin and the surface-treated aluminum material is further improved.
Condition 1: a profile of hydrogen concentration in a thickness direction of the aluminum hydrated oxide layer has a peak near the surface.
Condition 2: a profile of aluminum concentration in the thickness direction of the hydrated aluminum oxide layer has a minimum value.
Condition 3: a profile of the oxygen concentration in the thickness direction of the hydrated aluminum oxide layer has a maximum value.
It is preferable that a method of producing a surface-treated aluminum material of a third aspect of the present invention comprises: a concave feature forming step in which a plurality of concave features are formed on a surface of the aluminum material; and an aluminum hydrated oxide layer formation step in which an aluminum hydrated oxide layer having a thickness of 5 nm or more and 1000 nm or less is formed on the surface, an area of the plurality of concave features formed in the concave feature forming step being 15% or more of an area of the surface.

The surface-treated aluminum material of yet another aspect produced according to the present invention has high adhesion to a coating resin even when the resin coating is performed some time after the aluminum material is produced. Therefore, the resin coating may not necessarily be performed immediately after the production of the surface-treated aluminum material. Thus, the degree of freedom of the process is increased.

The aluminum hydrated oxide layer formation step, for example, may comprise a step of bringing the aluminum material into contact with one of warm water at 60°C or above, boiling water, and water vapor. In this case, adhesion between the produced surface-treated aluminum material and the coating resin is further improved.

In the method of producing a surface-treated aluminum material of a fourth aspect of the present invention, it is preferable that a desmut process is performed before the aluminum hydrated oxide layer formation step. In this case, the aluminum hydrated oxide layer tends to satisfy the above conditions 1 to 3. The adhesion between the produced surface-treated aluminum material and the coating resin is further improved.

### BRIEF DESCRIPTION OF THE DRAWINGS

FIG. 1 is a cross-sectional view showing a region 7 to be marked in a concave feature (pit) 1.
FIGs. 2A-2D show SEM images of a surface of a surface-treated aluminum material, taken at 250 magnifications, where FIG. 2A is a SEM image when immersion time in an aqueous sodium hydroxide is 0 seconds, FIG. 2B is a SEM image when the immersion time in the aqueous sodium hydroxide is 60 seconds, FIG. 2C is a SEM image when the immersion time in the aqueous sodium hydroxide is 120 seconds, and FIG. 2D is a SEM image when the immersion time in the aqueous sodium hydroxide is 300 seconds.
FIG. 3 is a graph showing profiles of aluminum concentration, hydrogen concentration, and oxygen concentration in a thickness direction of an aluminum hydrated oxide layer, acquired by GD-OES (glow discharge optical emission surface analysis).

### EXPLANATION OF REFERENCE NUMERALS

1 ... concave feature, 3 ... surface, 5 ... point, 7 ... area

### MODE FOR CARRYING OUT THE INVENTION

An embodiment of the present invention will be described. A plurality of concave features, for example, can be formed by etching. An etching process, for example, may comprise a process of bringing an aluminum material (aluminum base material before an aluminum hydrated oxide layer is formed) into contact with an alkaline solution (for example, aqueous sodium hydroxide) (for example, immersing an aluminum material in an alkaline solution). The concave feature, for example, may be a hole (pit) having a circular cross-section.

An area of the plurality of concave features is 15% or more of an area of the total surface (area when the surface of the surface-treated aluminum material is assumed to be flat). With the area of 15% or more, adhesion between the surface-treated aluminum material and the coating resin is improved. The larger the area of the plurality of concave features is, the more the adhesion between the surface-treated aluminum material and the coating resin is improved. The area of the plurality of concave features may be, for example, 20% or more, 30% or more, or 40% or more of the area of the total surface.

The area of the plurality of concave features can be calculated by the following steps (i) to (iii).
(i) A SEM image, taken at 250 magnifications, of the surface of the surface-treated aluminum material is acquired.
(ii) In the above SEM image, concave features (pits) having a diameter of 5 µm or more are extracted and marked (filled).
(iii) Using an image processing software (LUZEX AP manufactured by NIRECO Corporation), the marked area is calculated as described above.

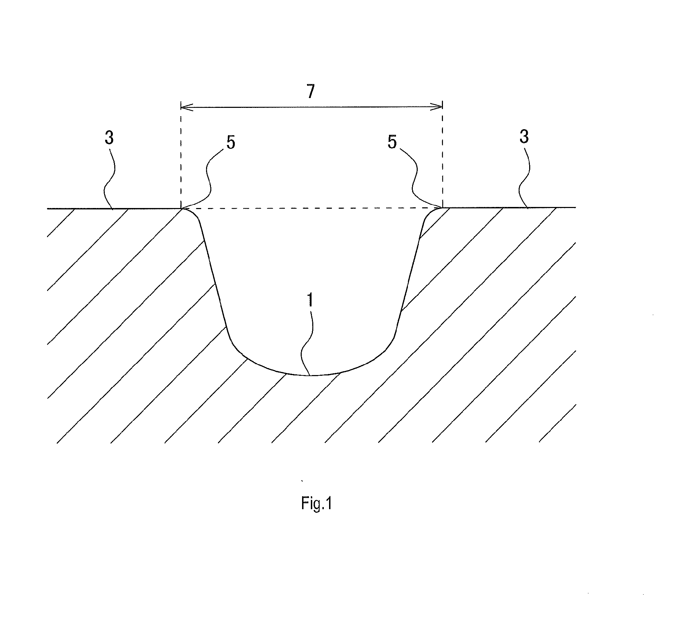

In the above step (ii), a portion to be marked is, as shown in FIG. 1, a region 7 bounded by a point 5 from which an average surface 3 of the aluminum material begins to drop, around the concave feature 1.

The aluminum hydrated oxide (boehmite) layer, for example, can be formed by bringing the aluminum material into contact with one of warm water at 60°C or above, boiling water, and water vapor. The thickness of the aluminum hydrated oxide layer is 5 nm or more and 1000 nm or less, and preferably 20 nm or more and 200nm or less. Because the thickness of the hydrated oxide film is 5 nm or more, it is possible to uniformly cover the surface of the aluminum material with the aluminum hydrated oxide layer. As a result, adhesion between the surface-treated aluminum material and the coating resin is improved. Also, when the thickness of the aluminum hydrated oxide layer is 20 nm or more, the surface of the aluminum material can be covered in more uniform manner with the aluminum hydrated oxide layer. Thus, partial variation in the adhesion between the surface-treated aluminum material and the coating resin is reduced.

Even if the aluminum hydrated oxide layer is thicker than 1000 nm, there would be no problem in terms of adhesion. When the thickness is 1000 nm or less, it is possible to reduce time and energy required for formation of the aluminum hydrated oxide layer. Also, it is more preferred that the thickness of the aluminum hydrated oxide layer is 200 nm or less, since the thickness of the aluminum hydrated oxide layer increases linearly according to processing time for forming the aluminum hydrated oxide layer.

The thickness of the aluminum hydrated oxide layer can be measured as follows. That is, in the surface-treated aluminum material after the formation of the aluminum hydrated oxide layer, a profile of aluminum concentration in a thickness direction is acquired by GD-OES (glow discharge optical emission surface analysis). In the profile, a distance from a point where an aluminum concentration is one half of an aluminum concentration in a sufficiently deep place to an outermost surface is regarded as a film thickness of the aluminum hydrated oxide layer. An apparatus used for GD-OES may be a GDA750 manufactured by RIGAKU. Measurement conditions of GD-OES may be as follows.

### Power: 25 W

Ar gas pressure: 3.5 hpa

Anode diameter: 2.5 mmΦ

It is preferred that the aluminum hydrated oxide layer comprises layers, for example, satisfying the above conditions 1 to 3. The aluminum hydrated oxide layer satisfying the conditions 1 to 3, for example, has a 3-layer structure composed of a layer with a hydrogen/aluminum ratio of 0.7 or more (first layer), a highly crystallized pseudo-boehmite layer with an oxygen/aluminum ratio of 0.4 or more and 0.8 or less (second layer), and a low crystallized pseudo-boehmite layer with an oxygen/aluminum ratio of 0.8 or more and 2 or less (third layer), from a side farther from the aluminum material. The aluminum hydrated oxide layer satisfying the above conditions 1 to 3 can be obtained by performing a desmut process before the aluminum hydrated oxide layer forming process.

A profile of hydrogen concentration, the profile of the aluminum concentration, and a profile of oxygen concentration in the above conditions 1 to 3 can be obtained by GD-OES (glow discharge optical emission surface analysis). An apparatus used for GD-OES may be a GDA750 manufactured by RIGAKU. Measurement conditions thereof may be as follows.

### Power: 25 W

Ar gas pressure: 3.5 hpa

Anode diameter: 2.5 mmΦ

The desmut process is, for example, a process to remove dissolved residue after alkali etching. The desmut process, for example, comprises a method of bringing the aluminum material into contact with a solution having an acid activity (e.g., nitric acid). By performing the desmut process, it is possible to obtain an aluminum hydrated oxide layer satisfying the above conditions 1-3.

In the surface-treated aluminum material, an anode oxide film may be present or absent between the aluminum material and the aluminum hydrated oxide layer.

### [EXAMPLES]

### 1. Production of surface-treated aluminum material

JIS-A6063 was used as the aluminum material. The aluminum material, after degreased with a weak alkaline degreasing solution, was immersed in a 5% aqueous sodium hydroxide at 50°C thereby to form etch pits (multiple concave features). The step of immersion in the aqueous sodium hydroxide is an embodiment of a concave feature forming step.

Then, the aluminum material was washed with water and immersed in a 10% nitric acid at room temperature. The process of immersion in the nitric acid is an embodiment of a desmut process.

Then, the aluminum material, after washed again, was immersed in pure water at 85°C, to form an aluminum hydrated oxide layer. The step of immersion in pure water at 85°C is an embodiment of a hydrated aluminum oxide layer forming step.

Through the above steps, the surface-treated aluminum material is produced. In this production method, time for immersing the aluminum material in the aqueous sodium hydroxide, and time of immersing the aluminum material in pure water at 85°C are variously changed, thereby to produce seven types of surface-treated aluminum materials S1 to S7. The processing conditions of S1 to S7 are as shown in Table 1.

**[Table 1]**

| | Processing time (sec) | | Film thickness of aluminum hydrated oxide layer (nm) | | | | Pit area ratio (%) |
|---|---|---|---|---|---|---|---|
| | Aqueous sodium hydroxide | Pure water at 85 °C | Total | 1st layer | 2nd layer | 3rd layer | |
| S1 | 120 | 300 | 56 | 8 | 12 | 36 | 17.8 |
| S2 | 300 | 300 | 100 | 10 | 30 | 60 | 27.1 |
| S3 | 60 | 300 | 21 | 3 | 6 | 12 | 2.1 |
| S4 | 0 | 240 | 50 | 5 | 15 | 30 | 0 |
| S5 | 120 | 5 | 3 | - | - | 3 | 17.8 |
| S6 | 120 | 10000 | 2000 | 20 | 980 | 1000 | 17.8 |
| S7 | 120 | 300 | 520 | 10 | 60 | 450 | 17.8 |

### 2. Evaluation of surface-treated aluminum material

### (1) Measurement of pit area

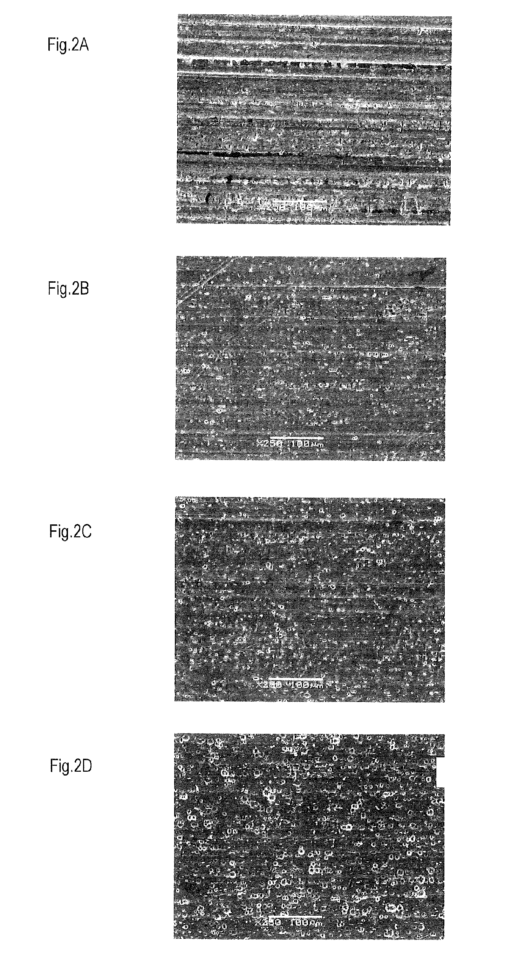

For each of S1 to S7, an area occupied by the pits in the surface of the surface-treated aluminum material was measured by the following steps of (i) to (iii).
(i) A SEM image of 250 magnifications imaging the surface of the surface-treated aluminum material was acquired. FIGS. 2A to 2D respectively show the SEM images of S4 (0 seconds of immersion time to the aqueous sodium hydroxide), S3 (60 seconds of immersion time to the aqueous sodium hydroxide), S1 (120 seconds of immersion time in the aqueous sodium hydroxide), and S2 (300 seconds of immersion time to the aqueous sodium hydroxide). In S3, S1, and S2, a plurality of pits were formed on the surface of the surface-treated aluminum material. Also, as the immersion time in the aqueous sodium hydroxide is increased, the size and the number of the pits were increased.
(ii) In the SEM images of the above (i), the pits with a diameter of 5 µm or more were extracted, and marked (filled).
(iii) Using an image processing software (LUZEX AP manufactured by Nireco, Ltd.), the area marked as described above (ii) was calculated. This area is an area the pits occupy in the surface of the surface-treated aluminum material.

Then, for each of S1 to S7, a ratio of the area occupied by pits (hereinafter referred to as a pit area ratio) to the total surface area of the surface-treated aluminum material was calculated. The calculation results were shown in Table 1 above.

### (2) Film thickness measurement of aluminum hydrated oxide layer

For each of S1 to S7, profiles of aluminum concentration, hydrogen concentration, and oxygen concentration in the thickness direction were obtained by GD-OES (glow discharge optical emission surface analysis). An apparatus used for GD-OES is a GDA750 manufactured by RIGAKU. Measurement conditions of GD-OES were as follows.

### Power: 25 W

Ar gas pressure: 3.5 hpa

Anode diameter: 2.5 mmΦ

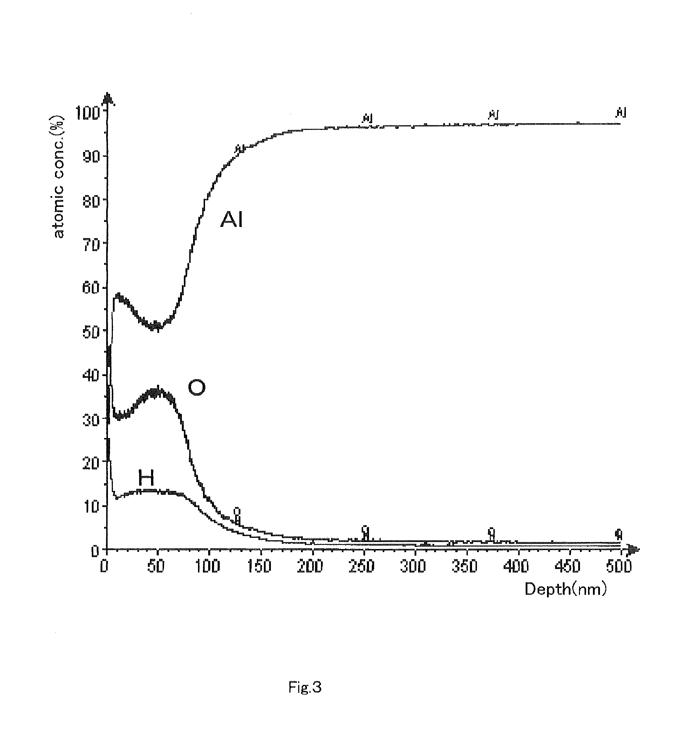

FIG. 3 shows the profile for S1. A distance from a point where an aluminum concentration is one half of an aluminum concentration in a sufficiently deep point (where the aluminum hydrated oxide layer is not formed) of the surface-treated aluminum material to the outermost surface was set to a film thickness of the aluminum hydrated oxide layer. Table 1 above shows the thickness of the hydrated aluminum oxide layer in S1 to S7.

### (3) Distribution of elements in aluminum hydrated oxide layer

In FIG. 3, the profile of the hydrogen concentration in the thickness direction of the aluminum hydrated oxide layer had a peak in the vicinity of the surface. Also, the profile of the aluminum concentration in the thickness direction of the aluminum hydrated oxide layer had a minimum value. Also, the profile of the oxygen concentration in the thickness direction of the aluminum hydrated oxide layer had a maximum value. Note that the same tendency was observed in GD-OES profiles in S2 to S6. On the other hand, such tendency was not observed in S7.

### (4) Measurement of adhesion

An adhesion test between the surface-treated aluminum material and an ethylene acrylic acid copolymer (EAA) resin was conducted for each case of immediately after the production, after left for 15 days from the production, after left for 30 days from the production, and after left for 100 days from the production of the surface-treated aluminum material. The adhesion test was carried out in each of S1 to S7. Here, the surface-treated aluminum material was left under the indoor environment simulating a warehouse. The method of the adhesion test was as follows.

### <Method of adhesion test>

Granular EAA resin was melt and molded at 130°C and 98 MPa according to a conventional method, to create a rectangular EAA material with a thickness of 0.5 mm, a width of 10 mm, and a length 20 mm.

Then, the first surface-treated aluminum material (20 mm x 100 mm) was heated for 150 seconds on a hot plate at 80°C. The rectangular EAA material was placed on the second surface-treated aluminum material (20 mm x 100 mm). The second surface-treated aluminum material was heated on a hot plate at 170°C to heat and melt the rectangular EAA material.

Thereafter, the second surface-treated aluminum material was placed on the first surface-treated aluminum material which has been heated at 80°C so that the rectangular EAA material is sandwiched by the two surface-treated aluminum materials. After held for 15 seconds by applying a load of 1 kgf, the overlapped materials were removed from the hot plate for cooling, to prepare an adhesion test piece.

For this adhesion test piece, a T-peel test was conducted in accordance with JIS-K6854-3 (1999). Its tensile speed was 50 mm/min. In addition to measuring a maximum intensity, its failure pattern was observed. When the failure pattern is cohesive failure peeling of the EAA resin, the test piece is considered to have passed the test. The test results are as shown in Table 2.

**[Table 2]**

| | Immediately after | | Left for 15 days | | Left for 30 days | | Left for 100 days | |
|---|---|---|---|---|---|---|---|---|
| | Adhesion strength (N/mm²) | Failure pattern | Adhesion strength (N/mm²) | Failure pattern | Adhesion strength (N/mm²) | Failure pattern | Adhesion strength (N/mm²) | Failure pattern |
| S1 | 70.7 | cohesive failure | 68.2 | cohesive failure | 65.8 | cohesive failure | 62.3 | cohesive failure |
| S2 | 100.9 | cohesive failure | 97.3 | cohesive failure | 95.1 | cohesive failure | 92.1 | cohesive failure |
| S3 | 54.6 | partial interfacial failure | 52 | interfacial failure | 51.5 | interfacial failure | 48.6 | interfacial failure |
| S4 | 46.5 | interfacial failure | 45.3 | interfacial failure | 44.8 | interfacial failure | 40.3 | interfacial failure |
| S5 | 63.5 | cohesive failure | 44.3 | interfacial failure | 39.6 | interfacial failure | 38.8 | interfacial failure |
| S6 | 101.5 | cohesive failure | 98.9 | cohesive failure | 97.3 | cohesive failure | 93.5 | cohesive failure |
| S7 | 52.3 | cohesive failure | 50.2 | cohesive failure | 48.8 | cohesive failure | 47.9 | cohesive failure |

As shown in Table 2, in S1, S2, S6, and S7, even after a long time has elapsed from the production of surface-treated aluminum material, the adhesion between the surface-treated aluminum material and the resin was high.

In contrast, in S3 to S5, when a long time has elapsed from the production of the surface-treated aluminum material, the adhesion between the surface-treated aluminum material and the resin was low.

## Claims

1. A surface-treated aluminum material provided with a surface having a plurality of concave features formed thereon, and being covered with a hydrated aluminum oxide layer with a thickness of 5 nm or more and 1000 nm or less; an area of the plurality of concave features being 15% or more of an area of the surface.

2. The surface-treated aluminum material according to claim 1, wherein the aluminum hydrated oxide layer satisfies conditions 1 to 3 below:
condition 1: a profile of hydrogen concentration in a thickness direction of the aluminum hydrated oxide layer has a peak near the surface;
condition 2: a profile of aluminum concentration in the thickness direction of the hydrated aluminum oxide layer has a minimum value; and
condition 3: a profile of oxygen concentration in the thickness direction of the hydrated aluminum oxide layer has a maximum value.

3. A production method of surface-treated aluminum material, the method comprising:
a concave feature forming step in which a plurality of concave features are formed on a surface of the aluminum material; and
an aluminum hydrated oxide layer forming step in which an aluminum hydrated oxide layer having a thickness of 5 nm or more and 1000 nm or less is formed on the surface,
an area of the plurality of concave features formed in the concave feature forming step being 15% or more of an area of the surface.

4. The production method according to claim 3,
wherein the aluminum hydrated oxide layer formation step comprises a step of bringing the aluminum material into contact with one of warm water at 60°C or above, boiling water, and water vapor.

5. The production method according to claim 3 or 4,
wherein a desmut step is performed before the hydrated aluminum oxide layer forming step.
